# EUROPÄISCHE PATENTSCHRIFT

(11) **EP 1 444 090 B1**
(45) Veröffentlichungstag und Bekanntmachung des Hinweises auf die Patenterteilung: **02.08.2006**
(21) Anmeldenummer: 02785058.5
(22) Anmeldetag: 13.11.2002
(51) Int. Cl.: B29C 70/44, B29C 70/34

(54) **VERFAHREN UND VORRICHTUNG ZUR HERSTELLUNG VON FASERVERSTÄRKTEN KUNSTSTOFFBAUTEILEN**
METHOD AND DEVICE FOR PRODUCING FIBRE-REINFORCED PLASTIC COMPONENTS
PROCEDE ET DISPOSITIF POUR FABRIQUER DES COMPOSANTS EN PLASTIQUE RENFORCES DE FIBRES

(30) Priorität: 16.11.2001 DE 10156123
(43) Veröffentlichungstag der Anmeldung: 11.08.2004
(73) Patentinhaber: EADS Deutschland GmbH, 85521 Ottobrunn (DE)
(72) Erfinder: LORENZ, Torsten, 86161 Augsburg (DE); STADLER, Franz, 85113 Böhmfeld (DE); UTECHT, Stefan, 86910 Kaufering (DE)
(86) Internationale Anmeldenummer: PCT/DE2002/004213
(87) Internationale Veröffentlichungsnummer: WO 2003/045671

(56) Entgegenhaltungen:
- DE-C- 19 915 083
- US-A- 4 942 013

## Beschreibung

Die Erfindung betrifft ein Verfahren und eine Vorrichtung zur Herstellung von faserverstärkten Kunststoff-Bauteilen . Insbesondere kann dabei ein Textil-Halbzeug zur Herstellung eines Beplankungsfeldes und ein Prepreg-Halbzeug zur Herstellung eines Versteifungselements für das Beplankungsfeld vorgesehen sein.

Es ist bekannt, faserverstärkte Kunststoff-Bauteile in einer sogenannten Prepreg-Technik herzustellen. Dabei werden ein großflächiges Hautfeld als Beplankungsfeld und Versteifungsprofile als Integralverstärkung verwendet. Das Hautfeld kann dabei durch automatisches Legen hergestellt werden. Das Verfahren gemäß der Prepreg-Technik ist jedoch nachteilig bei der Herstellung von Versteifungsprofilen mit nicht abwickelbarer Geometrie, da diese manuell laminiert werden müssen.
Ein solcher manuell auszuführender Arbeitsgang erhöht die Fertigungskosten.

Weiterhin ist beispielsweise aus der US-5.281.388 eine Harzfilm-Infusions-Technik (RFI) bekannt, bei der ein trockenes Gewebe in einer Aushärtevorrichtung mit einem vorgetränkten Harzfilm belegt und die derart bestückte und evakuierte Aushärtevorrichtung in einem Autoklaven geeigneten Temperatur- und Druckbehandlungen zur Aushärtung des faserverstärkten Kunststoffbauteiles unterzogen wird.

Weiterhin sind Verfahren bekannt, bei denen Faserverbund-Bauteile vollständig zunächst als trockene Faserhalbzeuge dargestellt und durch Flüssigharz-Injektion mit Vakuum und/oder Druck in geschlossenen oder offenen Aushärtewerkzeugen mit Harz befüllt und ausgehärtet werden.

Aus der DE 199 15 083 C1 ist ein Verfahren und eine Vorrichtung gemäβ dem Oberbegriff des Anspruchs 9 zur Herstellung von faserverstärkten Kunststoffbauteilen mit nicht-vollständig abwickelbarer Geometrie bekannt, bei dem die Kunststoffbauteile unter Verbindung eines Prepreg-Halbzeugs und eines Textil-Halbzeugs mittels eines Harzes gebildet werden. Dabei werden das Prepreg-Halbzeug und das Textil-Halbzeug gemeinsam in einer flexiblen Vakuumhaube angeordnet und unter Temperatur- und Druckbehandlung wird ein an dem textilen Halbzeug angeordneter Harzfilm zum Schmelzen gebracht, der dann das Textil-Halbzeug und die Verbindungsstelle zwischen dem Textil-Halbzeug und dem Prepreg-Halbzeug durchtränkt und verbindet. Bei diesem bekannten Verfahren werden sowohl das Prepreg-Halbzeug als auch das Textil-Halbzeug gemeinsam und vollständig von der flexiblem Vakuumhaube eingeschlossen und durch Evakuierung derselben unter Druck gesetzt.

Weiterhin ist aus der DE 201 02 569 U 1 eine Anordnung zur Herstellung eines Bauteils aus einem faserverstärktem Werkstoff mittels Harzimprägnierung eines Faserhalbzeugs bekannt, bei der das auf einer Form positionierte Faserhalbzeug mittels einer Vakuumfolie unter Evakuierung derselben unter Druck gesetzt und flüssiges Harz durch die Vakuumfolie hindurch zu dem Faserhalbzeug zugeführt wird.

Aufgabe der Erfindung ist es, ein verbessertes und kosteneffektives Verfahren zur. Herstellung von faserverstärkten Bauteilen zu schaffen.

Diese Aufgabe wird gemäß der vorliegenden Erfindung verfahrensmäßig durch die Merkmale der unabhängigen Patentansprüche gelöst. Vorteilhafte Weiterbildungen sind in den jeweiligen Unteransprüchen angegeben.

Ein besonderer Vorteil der vorliegenden Erfindung besteht in der Möglichkeit für eine gleichzeitige Nutzung von zwei Harzsystemen während der Einschussaushärtung eines Cocuring-Prozesses. Insbesondere können Flüssigharzsysteme für die Versteifungsprofile und Prepregs für die Beplankung verwendet werden im Gegensatz zu Verfahren nach dem Stand der Technik, bei denen während der gemeinsamen Einschussaushärtung (Cocuring) nur ein Harzsystem und nur eines der genannten Verfahren verwendet werden kann.

Bei dem erfindungsgemäßen Verfahren kann ein trockenes Textil-Halbzeug im Falle eines Beplankungsfelds im Verhältnis zum Prepreg-Halbzeug großflächig gestaltet sein. Das Prepreg-Halbzeug ist üblicherweise ein mit Harzfilmen versehenes trockenes Textil-Gewebe. Das Prepreg-Halbzeug, welches vorzugsweise zur Integralversteifung auf das trockene Textil-Halbzeug aufzubringen ist, kann als trockenes Gewebe in einer Fertigungs-Vorrichtung eingesetzt und auf dem Prepreg-Halbzeug positioniert werden. Es kann ein geeigneter Vakuum-Aufbau mit einer Vakuum-Kammer für die darauffolgende Harz-Injektion für das trockene Textil-Gewebe vorgesehen werden. Nach dem Zusammenfügen des Prepreg-Halbzeuges und des trockenen Textil-Gewebes wird die Kammer evakuiert. Anschließend erfolgt eine Aushärtung nach einem vorbestimmten Temperatur- und Vakuum-Verlauf. Die Aushärtung kann zusätzlich unter Druck in einem Autoklaven durchgeführt werden, insbesondere in Abhängigkeit der Werkstoff-Kombination,die in dem Verfahren für das Prepreg-Harz und Injektions-Harz verwendet worden ist.

Ein weiterer Vorteil des erfindungsgemäßen Verfahrens ist, daß fast jede beliebige Kombination von Harzwerkstoffen gewählt werden kann, sofern bei dem Prozess für keinem Werkstoff die max. Temperaturgrenze, z.B. zur Vermeidung einer Zersetzung, überschritten wird. Insbesondere können auch sehr zähflüssige Prepregsysteme zum Einsatz kommen. Auf diese Weise können kostengünstige Materialien verwendet werden, woduch die Herstellkosten reduziert werden können.

Im folgenden werden anhand der Zeichnungen Ausführungsbeispiele für das erfindungsgemäße Verfahren und die erfindungsgemäße Vorrichtung beschrieben.
Es zeigen:
- Fig.1 eine schematische Darstellung von drei Kammern zur Herstellung einer Kombination eines Beplankungsfeldes mit einem Versteifungselement gemäß einem Ausführungsbeispiel der Erfindung;
- Fig.2 ein Ausführungsbeispiel einer erfindungsgemäßen Vakuum-Vorrichtung zur Durchführung des Verfahrens;
- Fig. 3 ein Beispiel für einen Temperatur- und Vakuumverlauf zur Durchführung des Verfahrens gemäß einem Ausführungsbeispiel der Erfindung.

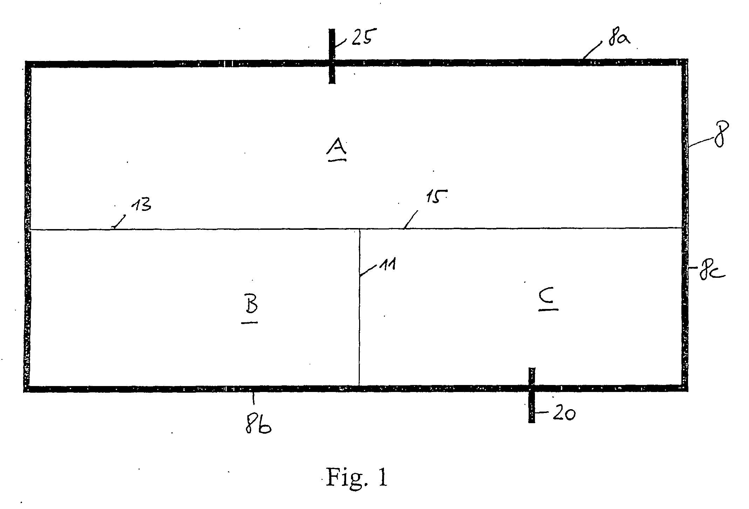

Die Figur 1 zeigt schematisch eine bei der erfindungsgemäßen HerstellungsVorrichtung bzw. dem erfindungsgemäßen Verfahren vorgesehene Be- und Entlüftungs-Kammer A, eine Prepreg-Halbzeug- oder Aushärtungs-Kammer B zur Aufnahme eines Prepreg-Halbzeugs und eine Textil-Halbzeug-Kammer oder Injektions-Kammer C zur Aufnahme eines trockenen Textil-Halbzeugs.

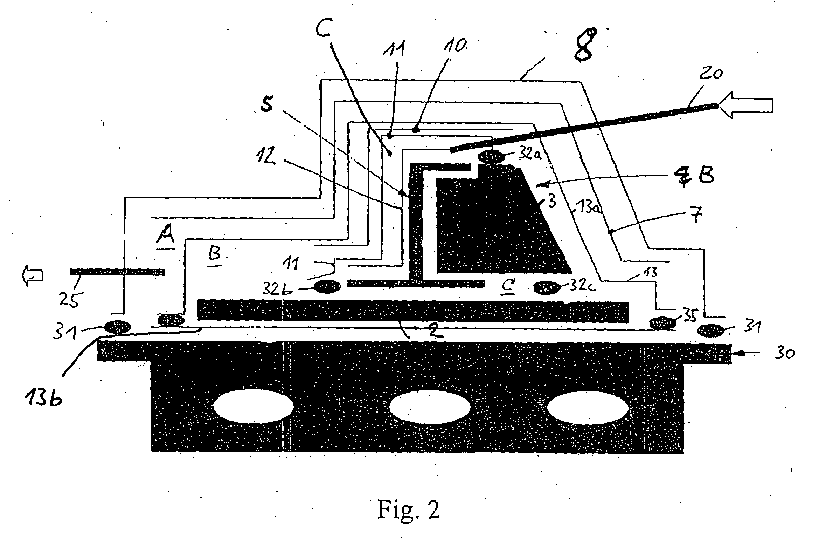

Die in der Figur 1 dargestellte räumliche Anordnung der Kammern ist beispielhaft und kann auch anders gestaltet sein. Beispielsweise kann die Injektions-Kammer C innerhalb der Aushärtungs-Kammer B angeordnet sein. Auch kann sich die Be-und Entlüftungs-Kammer A weiter um die Kammer B oder C herum erstrecken, als dies in der Figur 1 dargestellt ist. Die Be- und Entlüftungs-Kammer A kann aus mehreren Kammern oder Räumen gebildet sein. In dem Ausführungsbeispiel der Fig. 2 ist die Aushärtungs-Kammer B abschnittsweise nur von einer Membran 11 getrennt neben der Textil-Halbzeug oder Injektions-Kammer C gelegen. Auch hat die Aushärtungs-Kammer B eine gemeinsame Grenze zur Be- und Entlüftungs-Kammer A in Gestalt einer Membran 13. Optional kann auch die Injektions-Kammer C eine gemeinsame Grenze zur Be- und Entlüftungs-Kammer A in Gestalt einer Membran 15 aufweisen (nicht in der Ausführungsform der Figur 2). Die Membranen 11, 13, 15 sind aus Gas-durchlässigem, und Harz-undurchlässigem oder Harz-durchlässigem Material gebildet.

Abschnittsweise kann auch die Oberfläche des Textil-Halbzeugs oder das Prepreg-Halbzeugs die Grenze der Be- und Entlüftungs-Kammer A, der Aushärtungs-Kammer B oder der Injektions-Kammer C bilden, insbesondere wenn ein Randbereich der jeweiligen Membran auf dem entsprechenden Halbzeug gelegen ist.

### Zusammenfassend ist in einer ersten Ausführungsform

- die Prepreg-Kammer B zumindest bereichsweise von einer luft-durchlässigen Membran 11 getrennt an der Textil-Halbzeug-Kammer C gelegen und
- die Textil-Halbzeug-Kammer C und die Prepreg-Kammer B mittels einer luft-durchlässigen Membran an der Be- und Entlüftungs-Kammer A gelegen, wobei Mittel zur Zuführung des Harzes in die Textil-Halbzeug-Kammer C vorgesehen sind, die derart gestaltet ist, dass neben der Zufuhr-Leitung keine Umgebungsluft in die Kammer C gelangt.

Die Luftdurchlässigkeit der Membran zwischen den Kammern C, B und A kann durch das Material hergestellt sein und alternativ oder zusätzlich auch durch Belüftungsmittel, wie z. B. durch eine Wandung mit Öffnungen oder Ventilen realisiert sein. Dadurch kann auch eine Kontrolle oder Steuerung der Luftzufuhr zwischen den jeweiligen Kammern erreicht werden.

Die Kammern A, B, C sind derart angeordnet, dass bei einem Absaugen von Luft aus der Be- und Entlüftungskammer A sowohl der Kammer B als auch der Kammer C Luft entzogen wird.

Die Kammern A,B und C sind Vakuum-dicht, also Gas-undurchlässig zur Umgebung entweder mittels Folien 8, 8a, 8b, 8c oder abschnittsweise durch dichtes Auflegen der entsprechenden Folien 8, 8a, 8b, 8c auf einer dichten AuflageVorrichtung 30 von der Umgebung getrennt.

Die Be- und Entlüftungs-Kammer A ist eine Kammer, die zur Aufnahme von Luft und flüchtigen Prozessbestandteilen aus der Prepreg-Halbzeug-Kammer B und aus der Textil-Halbzeug-Kammer C dient. Bei dem Ausführungsbeispiel der Fig. 1 und 2 kann die Luft aus der Textil-Halbzeug-Kammer C direkt über die Membran 15 oder über eine Membran 11 und die Prepreg-Halbzeug-Kammer B in die Be-und Entlüftungs-Kammer A gebracht werden. Wenn alternativ die Kammer C in der Kammer B gelegen ist, gelangt die Luft der Kammer C über die Membran 11 in die Kammer B und von dort über die Membran15 in die Kammer A. Die Membranen 11, 13, 15 können harz-durchlässig oder Harz-undurchlässig gebildet sein.

Die Prepreg-Halbzeug-Kammer B ist zur Aufnahme eines Prepreg-Halbzeugs, also eines mit Harz vorimprägnierten Faser-Halbzeugs beispielsweise zur Herstellung eines Beplankungsfeldes vorgesehen. Erfindungsgemäß wird in diese Kammer B kein Harz injektiert, da bereits im Prepreg Harz vorhanden ist. Im Gegensatz dazu ist eine in die in die Textil-Halbzeug-Kammer C mündende InjektionsLeitung 20 zur Einführung von Flüssig-Harz vorgesehen. Eine zugeordnete Harz-Vorratskammer und Fördermittel zur Zuführung des Harzes sind in den Figuren nicht dargestellt.

Weiterhin ist ein Unterdruck-Erzeugungsmittel oder eine Vakuum-Pumpe vorgesehen, die über eine in die Be- und Entlüftungs-Kammer A mündende Abzugsleitung 25 einen einstellbaren Unterdruck in der Be- und Entlüftungs-Kammer A bewirken kann.

Erfindungsgemäß wird in die Textil-Halbzeug-Kammer C Harz injektiert. Während oder auch nach der Harz-Injektion wird über die Vakuum-Pumpe in der Be- und Entlüftungs-Kammer A Unterdruck eingestellt. Betrag und zeitlicher Verlauf des Unterdruckes hängen von verschiedenen Faktoren ab. Insbesondere ist hierfür die für das Prepreg-Harz und das Injektions-Harz vorgesehene Werkstoff-Kombination von Einfluss.

Aufgrund des Unterdrucks in der Be- und Entlüftungs-Kammer A erfolgt eine Absaugung von Gas zum einen aus der Textil-Halbzeug-Kammer C durch die Membran 15 und zum anderen aus der Prepreg-Halbzeug-Kammer B durch die Membran 13 bzw. 11 und 15.

Weiterhin wird durch das Anlegen des Unterdruckes in der Be- und Entlüftungs-Kammer A eine Entgasung des in der Prepreg-Halbzeug-Kammer B gelegenen Prepreg-Halbzeugs und somit eine Aushärtung desselben bewirkt.

Um die Injektion von Harz in die Textil-Halbzeug-Kammer C und die Aushärtung sowohl des dann mit Harz durchtränkten Textil-Halbzeugs sowie des Prepreg-Halbzeugs in der Prepreg-Halbzeug-Kammer B zu unterstützen, können in einer oder in beiden Kammern B, C bestimmte zeitabhängige oder konstante Temperaturen eingestellt werden. Der Unterdruck in der Be- und Entlüftungs-Kammer A und die Temperaturen in den Kammern B, C können auch über einen Regelkreis eingestellt werden.

In der Figur 2 ist eine Ausführungsform der Kammern A, B, C mit einem zunächst trockenen Textil-Halbzeug 5 und einem Prepreg-Halbzeug 2 dargestellt, um mittels der Fertigungs-Vorrichtung aus den Halbzeugen 5, 2 ein BeplankungsElement mit einer Versteifung herzustellen.

Die Be- und Entlüftungs-Kammer A ist in der Ausführungsform der Figur 2 bereichsweise von einer luftdichten Vakuumfolie 8 umgrenzt, die die Be- und Entlüftungs-Kammer A gegenüber der Umgebung abdichtet. Dazu ist ein Dichtungsband 31 vorgesehen, durch das die Vakuumfolie 8 an entsprechenden Auflageflächen einer Werkstück-Auflage 30 dicht geschlossen ist. Die Vakuumfolie 8 kann alternativ auch den gesamten Halbzeug-Aufbau umschließen.

In der Darstellung der Figur 2 ist die Textil-Halbzeug-Kammer C von der Membran 11 und einem Abschnitt eines Stützprofils 3 für das Textil-Halbzeug 5 umschlossen und innerhalb der Prepreg-Halbzeug-Kammer B gelegen. Dabei ist die Membran 11 aus einem Teil gebildet und nach Einbringung des trockenen Textil-Halbzeugs 5 mittels Dichtungselementen 32a, 32b, 32c geschlossen. Dabei liegen die Dichtungselemente 32a, 32b, 32c an Teilen des Textil-Halbzeugs 5, des Prepreg-Halbzeugs 2 bzw. des Stützprofils 3 an, so dass die Folie 11 zusammen mit diesen Elementen abschnittsweise eine Abgrenzung der Textil-Halbzeug-Kammer C bilden. Alternativ kann die Membran 11 die Textil-Halbzeug-Kammer C auch ganz umschließen oder in anderer Weise mittels entsprechender Dichtungselemente an Oberflächen des Textil-Halbzeugs 5, des Prepreg-Halbzeugs 2 oder eines Stützprofils 3 oder weiterer Hilfsvorrichtungen abgedichtet sein.

Die Membran 13 zur Umschließung der Prepreg-Kammer B ist in der Ausführungsform nach der Figur 2 in zwei Teilen 13a, 13b gebildet, die mittels eines Dichtungselements 35 dicht zusammengeschlossen sind. In der Darstellung der Figur 2 ist die Membran 13b auf einer Werkzeug-Auflage 30 gelegen.

Die Abdichtung der Kammern A, B, C für sich sowie gegenüber benachbarten Kammern kann auf verschiedene Weise erfolgen. Wesentlich an der Ausführungsform der Fig. 1 und 2 ist, dass
- die Prepreg-Kammer B luft-durchlässig - und nicht unbedingt harz-durchlässig zumindest bereichsweise an der Textil-Halbzeug-Kammer C gelegen ist und
- die Textil-Halbzeug-Kammer C mittels einer Membran an der Be- und Entlüftungs-Kammer A gelegen ist, wobei Mittel zur Zuführ8ung des Harzes in die Textil-Halbzeug-Kammer C durch einen luft-undurchlässigen Bereich der Kammer vorgesehen sind,
wobei ein Unterdruck in der Be- und Entlüftungs-Kammer A durch die luft-durchlässigen Membranen zwischen der Kammer A und B sowie zwischen der Kammer A und C einen Unterdruck sowohl in der Prepreg-Kammer B als auch in
der Textil-Halbzeug-Kammer C bewirkt. Die Membran 13 und ggf. die Membran 15 kann Harz-durchlässig oder Harz-undurchlässig sein.

Allgemein steht die Kammer C zumindest abschnittsweise in Austausch mit der Kammer B, wobei die Kammer C auch bezüglich der Lage der Kammer A vollständig von der Kammer B umgeben sein kann. Im letzteren Fall kann die Membran 15 entfallen. Dementsprechend steht zumindest die Kammer B über die Membran 13 im Luftsaustausch mit der Kammer A.

Alternativ oder zusätzlich zu der Membran zwischen der Textil-Halbzeug-Kammer C und der Be- und Entlüftungskammer A kann auch eine Wandung mit Öffnungen oder Ventilen vorgesehen sein.

Das Prepreg-Halbzeug kann auch für ein Versteifungs-Element und das trockene Textil-Halbzeug kann auch für ein Beplankungselement verwendet werden.

In einer oder in mehreren der Kammern A, B, C kann abschnittsweise eine Fließhilfe 7,10 bzw. 12 angeordnet sein. Diese verläuft in der Kammer A abschnittsweise zwischen der Folie 8 und der Membran 13 sowie ggf. der Folie 8 und der Membran 15. Auch kann eine Fließhilfe abschnittsweise zwischen dem Prepreg-Halbzeug 2 oder dem textilien Halbzeug 5 und einer jeweiligen entlang der entsprechenden Halbzeug-Oberfläche verlaufenden Membran gelegen sein. An Stellen, an denen Membranen (11 und 13 in Fig. 2) entlang zueinander verlaufen, kann eine Fließhilfe (10 in Fig. 2) zwischen diesen Mebranen gelegen sein. Grundsätzlich kann eine Fließhilfe abschnittsweise auf einer Oberfläche des Textil-Halbzeugs oder des Prepreg-Halbzeugs gelegen sein.

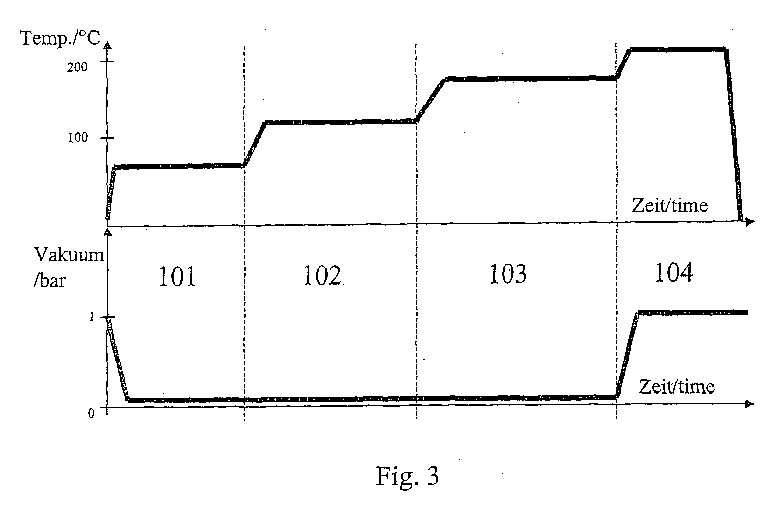

In der Figur 3 wird ein typischer Temperatur- und Vakuumverlauf gezeigt. Der Verlauf gliedert sich prinzipiell in die vier Phasen: eine Injektionsphase 101, eine Aushärtungszwischenphase 102, eine Aushärtungsphase 103 und eine Temperungsphase 104.

Das Vakuum ist vorzugsweise über Phasen 101 bis 103 konstant angelegt, wobei der Unterdruck typischerweise im der Größenordnung von 20mbar angesetzt wird.

In der Phase 104 ist das Vakuum nicht mehr erforderlich, aber ein anliegendes Vakuum kann vorteilhaft für die Bauteilqualität sein.

In der Injektionsphase 101, in der je nach Viskosität des Injektionsharzes typischerwiese Temperaturen von ca. 85°C eingestellt werden, wird durch das in der Kammer A anliegende Vakuum Unterdruck in der Kammer C bewirkt. Die Luft entweicht aus der Kammer A durch die Abzugsleitung 25. Die Textil-Halbzeuge in der Kammer C werden mit dem Injektionsharz (z.B. RTM 6) getränkt. Durch das in der Kammer C anliegende Vakuum werden die Fasermaterialien in den Kammern C und B zusammengedrückt.

Optional kann ab dieser Stufe mittels eines Autoklaven ein Überdruck (z.B. 2,5 bis 10 bar) bis zum Ende der Phase 103 oder 104 angelegt werden.

In der Phase 102 erfolgt eine Aufheizung der Kammern B und C auf Temperaturen von z.B. 100 bis 140 °C. Dadurch wird eine chemische Reaktion in den beiden Harz-Systeme (Kammer B=Prepreg, Kammer C = Flüssigharz) gestartet. Bedingt durch das chemische Verhalten von Epoxid-Harzen sinkt nun nochmals die Viskosität, so dass ein ideale Verteilung der Harz-Systeme insbesondere in der Kammer B innerhalb der Fasermaterialien erfolgt.

Nach einer bedingt durch die Harzsysteme festgelegten Zeit (typischerweise 1 bis 2 Stunden) erfolgt ein Aufheizen der Kammern B und C in der Phase 103, das so gestaltet sein muss, dass die Temperaturen ausreichend für die endgültige Aushärtung der Harzsystem sind (typ. 160 bis 180°C, ca. 1-2 h). Wenn es für eines der Harzsysteme vorteilhaft ist, erfolgt noch ein zusätzliches Tempern (thermische Nachbehandlung) bei z.B. 180-210°C. Hierbei ist weder ein Vakuum noch ein Autoklavdruck zwingend erforderlich, kann jedoch vorgesehen sein.

Das Verfahren gestattet es, typische Anforderungen an die Bauteilqualität von Luftfahrt-Bauteilen, wie z.B. Porenarmut, Faservolumengehalt mit 60%, Bauteilabmessungen und innere Laminatqualitäten, zu erfüllen.

Die voranstehend genannten Verfahrensparameter sind beispielhaft für ein typisches 180 °C - Prepregsystem in Kombination mit einem Flüssigharzsystem aufgezeigt. Bei anderen zulässigen und denkbaren Materialkombination müssen diese jeweils angepasst werden. Die Größe der herstellbaren Bauteile ist, sofern ein Überdruck bei einer bestimmten Materialkombination nicht erforderlich ist, nahezu unbegrenzt.

Die Halbzeuge 2, 5 können selbst eine abschnittsweise Abgrenzung der Kammern A, B, C bilden. So kann das Prepreg-Halbzeug teilweise eine Abgrenzung der Prepreg-Kammer B von der Textilhalbzeug-Kammer C sein (Figur 2). In diesem Fall ist ein Randbereich der Membran 11 über eine Dichtung 32b auf dem Prepeg-Halbzeug 2 befestigt.

Erfindungsgemäß ist also zur Herstellung eines Faserverbund-Bauteils, bei dem ein Prepreg-Halbzeug 2 mit einem Textil-Halbzeug 5 miteinander verbunden werden, vorgesehen:

Ein Verfahren zur Herstellung von faserverstärkten Kunststoffbauteilen aus mehreren Halbzeugen, bei dem die Halbzeuge in eine Kammer angeordnet werden, in die Harz einführbar ist und bei dem eine mit einer Gas-undurchlässigen Folie zur Umgebung abgegrenzten Be- und Entlüftungskammer A vorgesehen ist, aus der mittels einer Abzugsleitung 25 Gas abgezogen werden kann, mit den Schritten:
- Positionieren eines Prepreg-Halbzeug 2 und eines trockenes Textil-Halbzeug 5 in einer Weise, dass die Halbzeuge abschnittsweise aneinander anliegen,
- Bildung einer Kammer B um ein Prepreg-Halbzeug (2) mittels einer Gas-durchlässigen Membran (13), die die Kammer (B) zumindest teilweise umgibt,
- Bildung einer Kammer C um ein trockenes Textil-Halbzeug 5 mittels einer Gas-durchlässigen Membran 11, die die Kammer C zumindest teilweise umgibt und die zumindest abschnittsweise an der Kammer B mit dem Prepreg-Halbzeug 2 grenzt, wobei eine Injektionsleitung 20 zur Injektion von Harz in die Kammer C mit dem Textil-Halbzeug 5mündet,
- Bildung der Be- und Entlüftungskammer A, die zur Umgebung mittels einer Folie 8 gasdicht abgeschlossen ist und die abschnittsweise von der die Kammer B mit dem Prepreg-Halbzeug 2 umgebenden Membran 13 umgrenzt ist, wobei eine Gas-Abzugsleitung 20 in die Kammer C mit dem Textil-Halbzeug 5 mündet, so dass bei einem Absaugen von Luft aus der Be- und Entlüftungskammer A sowohl der Kammer B mit dem Prepreg-Halbzeug 2 als auch der Kammer C mit dem Textil-Halbzeug 5 Luft entzogen wird,
- Injizierung von Harz in die Textilhalbzeug-Kammer (C),
- Evakuierung der Be- und Entlüftungskammer A, so dass die Textilhalbzeug-Kammer C auf dem Wege über die Prepreg-Halbzeugkammer B zu der Be-und Entlüftungskammer A evakuiert wird,
- Aushärtung der Anordnung von Prepreg-Halbzeug 2 und Textilhalbzeug 5 nach einem vorbestimmten Temperatur- und Vakuum-Verlauf, um das Prepreg-Halbzeug 2 und das Textil-Halbzeug 5 miteinander zu verbinden.

Bei dem erfindungsgemäßen Verfahren kann die Textilhalbzeugkammer C innerhalb der Prepreg-Halbzeugkammer B angeordnet und von dieser eingeschlossen und die Prepreg-Halbzeugkammer B ihrerseits innerhalb der Be-und Entlüftungskammer A angeordnet und von dieser eingeschlossen sein.

Alernativ kann bei dem erfindungsgemäßen Verfahren die Textilhalbzeug-Kammer C und die Be- und Entlüftungskammer A abschnittsweise über eine Gas-durchlässige Membran 15 aneinander angrenzen, so dass die Prepreg-Halbzeugkammer B und die Textilhalbzeug-Kammer C jeweils direkt zu der Be-und Entlüftungskammer A evakuiert werden.

Bei dem erfindungsgemäßen Verfahren kann das Prepreg-Halbzeug 5 als integrale Versteifung des herzustellenden faserverstärkten Kunststoffbauteils vorgesehen sein.

Auch kann vorgesehen sein,
- dass das Textil-Halbzeug (5) und zumindest der mit dem Textilhalbzeug (5) zu verbindende Teil des Prepreg- Halbzeugs (2) von einer zumindest teilweise durch eine Membran (11) begrenzten Textilhalbzeug-Kammer (C) eingeschlossen wird und
- dass zumindest der nicht von der Textilhalbzeugkammer (C) eingeschlossene Teil des Prepreg-Halbzeugs (2) von einer zumindest teilweise durch eine Membran (13) begrenzte Prepreg-Halbzeugkammer (B) eingeschlossen wird.

Erfindungsgemäß ist weiterhin eine Vorrichtung zur Herstellung von faserverstärkten Kunststoffbauteilen aus einem Prepreg-Halbzeug 2 und einem Textilhalbzeug 5 vorgesehen, mit einer gegen die Umgebung, insbesondere durch eine luftundurchlässige Folie, luftdicht abgeschlossene Be- und

Entlüftungskammer A, die das Prepreg-Halbzeug 2 und das Textilhalbzeug 5 umgibt und über eine Abzugsleitung 5 evakuierbar ist, mit
- einer Anordnung eines Prepreg-Halbzeugs 2 und eines trockenes Textil-Halbzeug 5, bei der die Halbzeuge abschnittsweise aneinander anliegen,
- einer Kammer B um das Prepreg-Halbzeug 2 mittels einer Gas-durchlässigen Membran 13, die die Kammer B zumindest teilweise umgibt,
- einer Kammer C um ein trockenes Textil-Halbzeug 5 mittels einer Gas-durchlässigen Membran 11, die die Kammer C zumindest teilweise umgibt und die zumindest abschnittsweise an der Kammer B mit dem Prepreg-Halbzeug 2 grenzt, wobei eine Injektionsleitung 20 zur Injektion von Harz in die Kammer C mit dem Textil-Halbzeug 5 mündet,
- einer Be- und Entlüftungskammer A, die zur Umgebung mittels einer Folie 8 gasdicht abgeschlossen ist und die abschnittsweise von der die Kammer B mit dem Prepreg-Halbzeug 2 umgebenden Membran 13 umgrenzt ist, wobei eine Gas-Abzugsleitung 20 in die Kammer C mit dem Textil-Halbzeug 5 mündet, so dassso dass bei einem Absaugen von Luft aus der Be- und Entlüftungskammer A sowohl der Kammer B mit dem Prepreg-Halbzeug 2 als auch der Kammer C mit dem Textil-Halbzeug 5 Luft entzogen wird.

Bei der Vorrichtung können eine oder mehrere der Membranen 11, 13, 15 Harz-undurchlässig oder Harz-durchlässig sein. Die Textilhalbzeugkammer C kann innerhalb der Prepreg-Halbzeugkammer B angeordnet und von dieser eingeschlossen sein. Die Textilhalbzeug-Kammer C kann teilweise durch das Prepreg-Halbzeug 2 begrenzt sein.

## Patentansprüche

1. Verfahren zur Herstellung von faserverstärkten Kunststoffbauteilen aus mehreren Halbzeugen, bei dem die Halbzeuge in eine Kammer angeordnet werden, in die Harz einführbar ist und bei dem eine mit einer Gas-undurchlässigen Folie zur Umgebung abgegrenzten Be- und Entlüftungskammer (A) vorgesehen ist, aus der mittels einer Abzugsleitung (25) Gas abgezogen werden kann, mit den Schritten:
- Positionieren eines Prepreg-Halbzeug (2) und eines trockenes Textil-Halbzeug (5) in einer Weise, dass die Halbzeuge abschnittsweise aneinander anliegen,
- Bildung einer Kammer (B) um ein Prepreg-Halbzeug (2) mittels einer Gas-durchlässigen Membran (13), die die Kammer (B) zumindest teilweise umgibt,
- Bildung einer Kammer (C) um ein trockenes Textil-Halbzeug (5) mittels einer Gas-durchlässigen Membran (11), die die Kammer (C) zumindest teilweise umgibt und die zumindest abschnittsweise an der Kammer (B) mit dem Prepreg-Halbzeug (2) grenzt, wobei eine Injektionsleitung (20) zur Injektion von Harz in die Kammer (C) mit dem Textil-Halbzeug (5) mündet,
- Bildung der Be- und Entlüftungskammer (A), die zur Umgebung mittels einer Folie (8) Gas-dicht abgeschlossen ist und die abschnittsweise von der die Kammer (B) mit dem Prepreg-Halbzeug (2) umgebenden Membran (13) umgrenzt ist, wobei eine Gas-Abzugsleitung (25) in die Kammer (A) und eine Harzinjektionsleitung (20) in die Kammer (C) mit dem Textil-Halbzeug (5) mündet, so dass bei einem Absaugen von Luft aus der Be- und Entlüftungskammer (A) sowohl der Kammer (B) mit dem Prepreg-Halbzeug (2) als auch der Kammer (C) mit dem Textil-Halbzeug (5) Luft entzogen wird,
- Injizierung von Harz in die Textilhalbzeug-Kammer (C),
- Evakuierung der Be- und Entlüftungskammer (A), so dass die Textilhalbzeug-Kammer (C) auf dem Wege über die Prepreg-Halbzeugkammer (B) zu der Be- und Entlüftungskammer (A) evakuiert wird,
- Aushärtung der Anordnung von Prepreg-Halbzeug (2) und Textilhalbzeug (5) nach einem vorbestimmten Temperatur- und Vakuum-Verlauf, um das Prepreg-Halbzeug (2) und das Textil-Halbzeug (5) miteinander zu verbinden.

2. Verfahren nach Anspruch 1, wobei die Textilhalbzeugkammer (C) innerhalb der Prepreg-Halbzeugkammer (B) angeordnet und von dieser eingeschlossen wird, und daß die Prepreg-Halbzeugkammer (B) ihrerseits innerhalb der Be- und Entlüftungskammer (A) angeordnet und von dieser eingeschlossen wird.

3. Verfahren nach Anspruch 1, wobei die Textilhalbzeug-Kammer (C) und die Be- und Entlüftungskammer (A) abschnittsweise über eine Gas-durchlässige Membran (15) aneinander angrenzen, so dass die Prepreg-Halbzeugkammer (B) und die Textilhalbzeug-Kammer (C) jeweils direkt zu der Be- und Entlüftungskammer (A) evakuiert werden.

4. Verfahren nach einem der voranstehenden Ansprüche, wobei das Prepreg-Halbzeug (5) als integrale Versteifung des herzustellenden faserverstärkten Kunststoffbauteils vorgesehen ist.

5. Verfahren nach einem der voranstehenden Ansprüche, wobei das Aushärten des Harzes zusätzlich unter Druck in einem Autoklaven durchgeführt wird.

6. Verfahren nach einem der voranstehenden Ansprüche, wobei die Bildung der Kammern zur Gestaltung des herzustellenden Kunststoff-Bauteils derart vorgesehen ist,
- das Textil-Halbzeug (5) und zumindest der mit dem Textilhalbzeug (5) zu verbindende Teil des Prepreg- Halbzeugs (2) von einer zumindest teilweise durch eine Membran (11) begrenzten Textilhalbzeug-Kammer (C) eingeschlossen wird und
- zumindest der nicht von der Textilhalbzeugkammer (C) eingeschlossene Teil des Prepreg-Halbzeugs (2) von einer zumindest teilweise durch eine Membran (13) begrenzte Prepreg-Halbzeugkammer (B) eingeschlossen wird.

7. Verfahren nach einem der voranstehenden Ansprüche, wobei eine oder mehrere der Membranen (11, 13, 15) Harz-undurchlässig ist.

8. Verfahren nach einem der voranstehenden Ansprüche 1 bis 6, wobei eine oder mehrere der Membranen (11, 13, 15) Harz-durchlässig ist.

9. Vorrichtung zur Herstellung von faserverstärkten Kunststoffbauteilen aus einem Prepreg-Halbzeug (2) und einem Textilhalbzeug (5), mit einer gegen die Umgebung, insbesondere durch eine luftundurchlässige Folie, luftdicht abgeschlossene Be- und Entlüftungskammer (A), die das Prepreg-Halbzeug (2) und das Textilhalbzeug (5) umgibt und über eine Abzugsleitung (25) evakuierbar ist, **gekennzeichnet durch**
- eine Anordnung eines Prepreg-Halbzeug (2) und eines trockenes Textil-Halbzeug (5), bei der die Halbzeuge abschnittsweise aneinander anliegen,
- eine Kammer (B) um ein Prepreg-Halbzeug (2) mittels einer Gas-durchlässigen Membran (13), die die Kammer (B) zumindest teilweise umgibt,
- eine Kammer (C) um ein trockenes Textil-Halbzeug (5) mittels einer Gas-durchlässigen Membran (11), die die Kammer (C) zumindest teilweise umgibt und die zumindest abschnittsweise an der Kammer (B) mit dem Prepreg-Halbzeug (2) grenzt, wobei eine Injektionsleitung (20) zur Injektion von Harz in die Kammer (C) mit dem Textil-Halbzeug (5) mündet,
- eine Be- und Entlüftungskammer (A), die zur Umgebung mittels einer Folie (8) gasdicht abgeschlossen ist und die abschnittsweise von der die Kammer (B) mit dem Prepreg-Halbzeug (2) umgebenden Membran (13) umgrenzt ist, wobei eine Gas-Abzugsleitung (25) in die Kammer (A) und eine Harzinjektionsleitung (20) in die Kammer (C) mit dem Textil-Halbzeug (5) mündet, so dass bei einem Absaugen von Luft aus der Be- und Entlüftungskammer (A) sowohl der Kammer (B) mit dem Prepreg-Halbzeug (2) als auch der Kammer (C) mit dem Textil-Halbzeug (5) Luft entzogen wird,.

10. Vorrichtung zur Herstellung von faserverstärkten Kunststoffbauteilen aus einem Prepreg-Halbzeug (2) und einem Textilhalbzeug (5) nach dem Anspruch 9, wobei eine oder mehrere der Membranen (11, 13, 15) Harz-undurchlässig ist.

11. Vorrichtung zur Herstellung von faserverstärkten Kunststoffbauteilen aus einem Prepreg-Halbzeug (2) und einem Textilhalbzeug (5) nach dem Anspruch 9, wobei eine oder mehrere der Membranen (11, 13, 15) Harz-durchlässig ist.

12. Vorrichtung nach einem der Ansprüche 9 bis 11, wobei, die Textilhalbzeugkammer (C) innerhalb der Prepreg-Halbzeugkammer (B) angeordnet und von dieser eingeschlossen ist.

13. Vorrichtung nach einem der Ansprüche 11 oder 12, wobei die Textilhalbzeug-Kammer (C) teilweise durch das Prepreg-Halbzeug (2) begrenzt ist.

## Claims

1. A method of producing fibre-reinforced plastics components from a plurality of semi-finished products, in which the semi-finished products are arranged in a chamber into which resin may be introduced and in which a venting chamber (A) separated from the surrounding environment by a gas-impermeable film is provided, from which gas may be drawn off by means of a discharge line (25), having the steps of:
- positioning a prepreg semi-finished product (2) and a dry textile semi-finished product (5) in such a manner that the semi-finished products adjoin one another in places,
- forming a chamber (B) around a prepreg semi-finished product (2) by means of a gas-permeable membrane (13), which at least partially surrounds the chamber (B),
- forming a chamber (C) around a dry textile semi-finished product (5) by means of a gas-permeable membrane (11), which at least partially surrounds the chamber (C) and which at least partially adjoins the chamber (B) with the prepreg semi-finished product (2), wherein an injection line (20) for injecting resin leads into the chamber (C) with the textile semi-finished product (5),
- forming the venting chamber (A), which is sealed off in a gas-tight manner from the surrounding environment by means of a film (8) and which is surrounded in part by the membrane (13) surrounding the chamber (B) with the prepreg semi-finished product (2), wherein a gas discharge line (25) leads into the chamber (A) and a resin injection line (20) leads into the chamber (C) with the textile semi-finished product (5), so that, when air is drawn off from the venting chamber (A), air is extracted from both the chamber (B) with the prepreg semi-finished product (2) and the chamber (C) with the textile semi-finished product (5),
- injecting resin into the textile semi-finished product chamber (C),
- evacuating the venting chamber (A), so that the textile semi-finished product chamber (C) is evacuated on the way through the prepreg semi-finished product chamber (B) to the venting chamber (A),
- curing the arrangement of prepreg semi-finished product (2) and textile semi-finished product (5) in accordance with a predetermined temperature and vacuum profile, in order to bond together the prepreg semi-finished product (2) and the textile semi-finished product (5).

2. A method according to claim 1, wherein the textile semi-finished product chamber (C) is arranged within the prepreg semi-finished product chamber (B) and enclosed thereby, and the prepreg semi-finished product chamber (B) is in turn arranged within the venting chamber (A) and enclosed thereby.

3. A method according to claim 1, wherein the textile semi-finished product chamber (C) and the venting chamber (A) adjoin one another in places via a gas-permeable membrane (15), so that the prepreg semi-finished product chamber (B) and the textile semi-finished product chamber (C) are in each case evacuated directly to the venting chamber (A).

4. A method according to any one of the preceding claims, wherein the prepreg semi-finished product (5) is provided as an integral stiffener for the fibre-reinforced plastics component to be produced.

5. A method according to any one of the preceding claims, wherein curing of the resin is additionally performed under pressure in an autoclave.

6. A method according to any one of the preceding claims, wherein the chambers for fashioning the plastics components to be produced are formed as follows:
- the textile semi-finished product (5) and at least the part of the prepreg semi-finished product (2) to be bonded to the textile semi-finished product (5) is enclosed by a textile semi-finished product chamber (C) at least partially bounded by a membrane (11) and
- at least the part of the prepreg semi-finished product (2) not enclosed by the textile semi-finished product chamber (C) is enclosed by a prepreg semi-finished product chamber (B) at least partially bounded by a membrane (13).

7. A method according to any one of the preceding claims, wherein one or more of the membranes (11, 13, 15) is impermeable to resin.

8. A method according to any one of preceding claims 1 to 6, wherein one or more of the membranes (11, 13, 15) is permeable to resin.

9. An apparatus for producing fibre-reinforced plastics components from a prepreg semi-finished product (2) and a textile semi-finished product (5), having a venting chamber (A) sealed in an airtight manner relative to the surrounding environment, in particular by an air-impermeable film, the venting chamber (A) surrounding the prepreg semi-finished product (2) and the textile semi-finished product (5) and being evacuatable via a discharge line (25), **characterised by**
- an arrangement of a prepreg semi-finished product (2) and a dry textile semi-finished product (5), in which the semi-finished products adjoin one another in places,
- a chamber (B) around a prepreg semi-finished product (2) by means of a gas-permeable membrane (13), which at least partially surrounds the chamber (B),
- a chamber (C) around a dry textile semi-finished product (5) by means of a gas-permeable membrane (11), which at least partially surrounds the chamber (C) and which at least partially adjoins the chamber (B) with the prepreg semi-finished product (2), wherein an injection line (20) for injecting resin leads into the chamber (C) with the textile semi-finished product (5),
- a venting chamber (A), which is sealed off in a gas-tight manner from the surrounding environment by means of a film (8) and which is surrounded in part by the membrane (13) surrounding the chamber (B) with the prepreg semi-finished product (2), wherein a gas discharge line (25) leads into the chamber (A) and a resin injection line (20) leads into the chamber (C) with the textile semi-finished product (5), so that, when air is drawn off from the venting chamber (A), air is extracted from both the chamber (B) with the prepreg semi-finished product (2) and the chamber (C) with the textile semi-finished product (5).

10. An apparatus for producing fibre-reinforced plastics components from a prepreg semi-finished product (2) and a textile semi-finished product (5) according to claim 9, wherein one or more of the membranes (11, 13, 15) is impermeable to resin.

11. An apparatus for producing fibre-reinforced plastics components from a prepreg semi-finished product (2) and a textile semi-finished product (5) according to claim 9, wherein one or more of the membranes (11, 13, 15) is permeable to resin.

12. An apparatus according to any one of claims 9 to 11, wherein the textile semi-finished product chamber (C) is arranged within the prepreg semi-finished product chamber (B) and enclosed thereby.

13. An apparatus according to either one of claims 11 or 12, wherein the textile semi-finished product chamber (C) is partially bounded by the prepreg semi-finished product (2).

## Revendications

1. Procédé pour fabriquer des composants en plastique renforcés de fibres à partir de plusieurs demi-produits, selon lequel on dispose les demi-produits dans une chambre dans laquelle de la résine peut être introduite, et une chambre d'aération et de désaération (A) est délimitée par un film imperméable aux gaz, dont du gaz peut être extrait au moyen d'une conduite d'évacuation (25), comprenant les étapes suivantes :
- positionnement d'un demi-produit préimprégné (2) et d'un demi-produit textile sec (5) de telle manière que les demi-produits reposent l'un contre l'autre par secteurs,
- formation d'une chambre (B) autour d'un demi-produit préimprégné (2) au moyen d'une membrane perméable aux gaz (13) qui entoure au moins partiellement la chambre (B),
- formation d'une chambre (C) autour d'un demi-produit textile sec (5) au moyen d'une membrane perméable aux gaz (11) qui entoure au moins partiellement la chambre (C) et qui la sépare au moins par secteur de la chambre (B) contenant le demi-produit préimprégné (2), une conduite d'injection (20) débouchant dans la chambre (C) contenant le demi-produit textile (5) pour injecter de la résine,
- formation de la chambre d'aération et de désaération (A) qui est scellée de manière étanche aux gaz au moyen d'un film (8) et qui est délimitée par secteur par la membrane (13) entourant la chambre (B) contenant le demi-produit préimprégné (2), une conduite d'extraction de gaz (25) débouchant dans la chambre (A) et une conduite d'injection de résine (20) dans la chambre (C) contenant le demi-produit textile (5), afin que, lors de l'aspiration de l'air de la chambre d'aération et de désaération (A), de l'air soit évacué aussi bien de la chambre (B) contenant le demi-produit préimprégné (2) que de la chambre (C) contenant le demi-produit textile (5),
- injection de résine dans la chambre de demi-produit textile (C),
- évacuation de la chambre d'aération et de désaération (A), de sorte que la chambre de demi-produit textile (C) est évacuée sur le circuit menant à la chambre d'aération et de désaération (A) via la chambre de demi-produit préimprégné (B), et
- durcissement du dispositif de demi-produit préimprégné (2) et de demi-produit textile (5) selon une courbe de température et de vide prédéterminée, pour lier ensemble le demi-produit préimprégné (2) et le demi-produit textile (5).

2. Procédé selon la revendication 1,
selon lequel la chambre de demi-produit textile (C) est disposée à l'intérieur de la chambre de demi-produit préimprégné (B) et entourée par celle-ci, et la chambre de demi-produit préimprégné (B) est à son tour disposée à l'intérieur de la chambre d'aération et de désaération (A) et entourée par celle-ci.

3. Procédé selon la revendication 1,
selon lequel la chambre de demi-produit textile (C) et la chambre d'aération et de désaération (A) sont séparées l'une de l'autre par secteur par une membrane perméable aux gaz (15), de sorte que la chambre de demi-produit préimprégné (B) et la chambre de demi-produit textile (C) sont évacuées chacune directement vers la chambre d'aération et de désaération (A).

4. Procédé selon une des revendications précédentes,
selon lequel le demi-produit préimprégné (2) est prévu en guise de renfort intégré du composant en plastique renforcé de fibres à fabriquer.

5. Procédé selon une des revendications précédentes,
selon lequel le durcissement de la résine est en outre réalisé sous pression dans un autoclave.

6. Procédé selon une des revendications précédentes,
selon lequel la formation des chambres pour réaliser le composant en plastique à fabriquer est prévue de telle sorte que :
- le demi-produit textile (5) et au moins la partie du demi-produit préimprégné (2) à lier avec le demi-produit textile (5) soient contenus dans une chambre de demi-produit textile (C) au moins partiellement délimitée par une membrane (11), et
- au moins la partie du demi-produit préimprégné (2) non contenue dans la chambre de demi-produit textile (C) soit contenue dans une chambre de demi-produit préimprégné (C) au moins partiellement délimitée par une membrane (13).

7. Procédé selon une des revendications précédentes,
selon lequel une ou plusieurs des membranes (11, 13, 15) sont imperméables à la résine.

8. Procédé selon une des revendications précédentes 1 à 6,
selon lequel une ou plusieurs des membranes (11, 13, 15) sont perméables à la résine.

9. Dispositif pour fabriquer des composants en plastique renforcés de fibres à partir d'un demi-produit préimprégné (2) et d'un demi-produit textile (5), comprenant une chambre d'aération et de désaération (A) scellée de manière étanche à l'air par rapport à l'environnement, en particulier par un film imperméable à l'air, et qui entoure le demi-produit préimprégné (2) et le demi-produit textile (5) et peut être évacuée par une conduite d'évacuation (25),
**caractérisé par**
- une disposition d'un demi-produit préimprégné (2) et d'un demi-produit textile sec (5) dans laquelle les demi-produits reposent l'un contre l'autre par secteurs,
- une chambre (B) autour d'un demi-produit préimprégné (2) au moyen d'une membrane perméable aux gaz (13) qui entoure au moins partiellement la chambre (B),
- une chambre (C) autour d'un demi-produit textile sec (5) au moyen d'une membrane perméable aux gaz (11) qui entoure au moins partiellement la chambre (C) et qui la sépare au moins par secteur de la chambre (B) contenant le demi-produit préimprégné (2), une conduite d'injection (20) débouchant dans la chambre (C) contenant le demi-produit textile pour injecter de la résine,
- une chambre d'aération et de désaération (A) qui est scellée de manière étanche aux gaz par rapport à l'environnement au moyen d'un film (8) et qui est délimitée par secteur par la membrane (13) entourant la chambre (B) contenant le demi-produit préimprégné (2), une conduite d'extraction de gaz (25) débouchant dans la chambre (A) et une conduite d'injection de résine (20) dans la chambre (C) contenant le demi-produit textile (5), afin que, lors de l'aspiration de l'air de la chambre d'aération et de désaération (A), de l'air soit évacué aussi bien de la chambre (B) contenant le demi-produit préimprégné (2) que de la chambre (C) contenant le demi-produit textile (5).

10. Dispositif pour fabriquer des composants en plastique renforcés de fibres à partir d'un demi-produit préimprégné (2) et d'un demi-produit textile (5) selon la revendication 9, dans lequel une ou plusieurs des membranes (11, 13, 15) sont imperméables à la résine.

11. Dispositif pour fabriquer des composants en plastique renforcés de fibres à partir d'un demi-produit préimprégné (2) et d'un demi-produit textile (5) selon la revendication 9, dans lequel une ou plusieurs des membranes (11, 13, 15) sont perméables à la résine.

12. Dispositif selon une des revendications 9 à 11, dans lequel la chambre de demi-produit textile (C) est disposée à l'intérieur de la chambre de demi-produit préimprégné (B) et entourée par celle-ci.

13. Dispositif selon une des revendications 11 ou 12, dans lequel, la chambre de demi-produit préimprégné (C) est partiellement délimitée par le demi-produit préimprégné (2).
